# EUROPÄISCHE PATENTANMELDUNG

(11) **EP 3 026 847 A1**
(43) Veröffentlichungstag der Anmeldung: **01.06.2016**
(21) Anmeldenummer: 15195754.5
(22) Anmeldetag: 23.11.2015
(51) Int. Cl.: H04L 12/24, H04L 12/26

(54) **PROFILVERGLEICH**

(30) Priorität: 25.11.2014 DE 202014105671 U
(71) Anmelder: Insys Microelectronics GmbH, 93049 Regensburg (DE)
(72) Erfinder: Gallenberger, Stefan, 93049 Regensburg (DE); Heider, Markus, 93133 Burglengenfeld (DE)
(74) Vertreter: Hannke, Christian

(57) **Zusammenfassung**

Die Erfindung betrifft ein Routersystem zur Übertragung von Daten zwischen mindestens zwei verschiedenen Datennetzen, umfassend ein auf ein standardisiertes Trägersystem auf-bringbares Gehäuse, wobei das Routersystem eine im Gehäuse angeordnete Konfigurati-onseinrichtung zum Erstellen, Speichern und Verwalten von mindestens zwei Konfigurati-onsprofilen umfasst. Das Routersystem zeichnet sich insbesondere dadurch aus, dass die Konfigurationseinrichtung mit mindestens einem der mit dem Routersystem verbundenen Datennetze verbunden ist und durch die Konfigurationseinrichtung über dieses Datennetz eine grafische Konfigurationsoberfläche auf einer zur Darstellung der Konfigurationsoberflä-che geeigneten Anzeigeeinrichtung darstellbar ist, wobei durch die Konfigurationsoberfläche zumindest zwei in der Konfigurationseinrichtung gespeicherte Konfigurationsprofile auswählbar sind und diese direkt durch die Konfigurationseinrichtung vergleichbar sind.

## Beschreibung

Routersystem zur Übertragung von Daten zwischen mindestens zwei verschiedenen Datennetzen, umfassend ein auf ein standardisiertes Trägersystem aufbringbares Gehäuse, wobei das Routersystem eine im Gehäuse angeordnete Konfigurationseinrichtung zum Erstellen, Speichern und Verwalten von mindestens zwei Konfigurationsprofilen umfasst.

Als Router werden Geräte verstanden, die Datenpakete von einem in ein anderes oder in mehrere andere Netzwerke übertragen können. Router zur Verbindung mindestens zweier Datennetzwerke miteinander sind aus dem Stand der Technik bekannt. Dabei unterscheiden sich Router je nach Anwendung teilweise sehr stark voneinander. Internetanbieter oder auch andere Unternehmen mit sehr großen internen Netzwerken und/oder sehr großem Datendurchsatz verwenden üblicherweise Hochleistungsrouter im 19-Zoll Format. Diese Router sind modular aufgebaut und benötigen aufgrund ihrer Leistungsfähigkeit üblicherweise eine aktive Kühlung und entsprechend leistungsfähige Netzteile. Diese Hochleistungsrouter werden üblicherweise in Ihrer Konfiguration selten verändert.

Für den privaten Bereich, wo die Anbindung eines einzigen oder weniger Netzwerkteilnehmer mit einem externen Netzwerk (Internet) gewünscht wird, sind Router oft kompakte Geräte mit entsprechend geringer Leistungsfähigkeit. Sie umfassen oft eine Modemfunktionalität die die Verbindung über DSL oder Kabel mit dem Internet ermöglicht. Die Konfiguration dieser Geräte wird in der Regel einmalig erstellt, und während der meist mehrjährigen Einsatzdauer nicht geändert. Unterschiedliche Betriebsmodi sind unüblich.

Insbesondere bei professionellen Anwendungen verbreitet sich jedoch der Einsatz von Kommunikationsgeräten zur Datenübertragung sehr. Auch hier hat sich als Kommunikationsprotokoll weitgehend das Internet Protokoll (IP) durchgesetzt. Bei Verwendung des IP-Protokolls ist an jedem Übergangspunkt eines IP-Netzes in ein anders Netz ein Router erforderlich. Bei professionellen Routern ist es außerdem üblich, dass weitere Schnittstellen vorhanden sind, die andere Protokolle als IP beherrschen.

Die professionelle Datenübertragungstechnik per IP-Protokoll findet zunehmend Anwendung in der Industrie, im Anlagenbau, in der Automatisierungstechnik, in der Gebäudeautomatisation, in der Energiewirtschaft (z.B. Smart Grid, Smart Metering, Elektromobilität und andere), in der Infrastruktur (z.B. Wasserver- oder -entsorgung), bei Bezahlsystemen, in medizintechnischen Geräten und vielen Bereichen mehr. Insbesondere auch in Bereichen der sogenannten kritischen Infrastrukturen nimmt die Verbreitung der IP-Kommunikation stark zu, wodurch auch die Anforderungen an die verwendeten Router kontinuierlich wachsen. In professionellen Anwendungen, insbesondere im Bereich des temporären Fernzugriffs auf Maschinen und Anlagen sind Router häufig in unterschiedlichen Betriebszuständen eingesetzt, die durch unterschiedliche Konfigurationen ermöglicht werden können. Dies unterscheidet sie von Hochleistungsroutern in Übertragungsnetzen der Telekommunikationsprovider, und auch von Routern im Privatbereich. In manchen Anwendungsfällen ist es aus Gründen der Betriebssicherheit oder zur Vermeidung von Unfällen vorgeschrieben (z.B. sog. Maschinenrichtlinie), dass ein Fernzugriff nur möglich sein darf, wenn vor Ort eine Person die Freigabe für den Fernzugriff erteilt, z.B. über einen Schalter an einer Maschine. Dies ermöglicht es, dass Fachkräfte aus großer Distanz Änderungen und Fehlerbehebungen an Anlagen vornehmen können, die ein Bediener vor Ort aufgrund mangelnder Fachkenntnis nicht vornehmen könnte.

In professionellen Anwendungen gattungsgemäßer Router ist es weiterhin oft zweckmäßig für unterschiedliche Betriebszustände unterschiedliche Konfigurationen auf dem Router zu speichern. Derartige Konfigurationsprofile können dann nach Bedarf aktiviert werden. Professionelle Router bieten allerdings eine Vielzahl von Parametern zur Beeinflussung ihres Verhaltens, oft mehrere hundert Parameter. Die Abweichung der Parameter in den unterschiedlichen Konfigurationen ist aufgrund der großen Menge an Parametern in der Regel sehr schwer zu erkennen. Ein direkter Vergleich von Konfigurationen ist nach Stand der Technik bei professionellen Routern nicht möglich. In Einzelfällen ist es möglich, einen Transfer von Konfigurationsdateien auf einen externen Rechner vorzunehmen, um dort mit geeigneten, vom Router unabhängigen Verfahren einen Vergleich von Konfigurationen darzustellen.

Es ist daher Aufgabe der Erfindung ein Routersystem bereitzustellen, das einen unmittelbaren Vergleich von unterschiedlichen auf dem Routersystem gespeicherten Konfigurationen ermöglicht.

Diese Aufgabe wird durch den Gegenstand des unabhängigen Patentanspruches 1 gelöst.

Ein erfindungsgemäßes Routersystem zur Übertragung von Daten zwischen mindestens zwei verschiedenen Datennetzen umfasst ein auf ein standardisiertes Trägersystem aufbringbares Gehäuse, wobei das Routersystem eine im Gehäuse angeordnete Konfigurationseinrichtung zum Erstellen, Speichern und Verwalten von mindestens zwei Konfigurationsprofilen umfasst. Das erfindungsgemäße Routersystem zeichnet sich insbesondere dadurch aus, dass die Konfigurationseinrichtung mit mindestens einem der mit dem Routersystem verbundenen Datennetze verbunden ist und durch die Konfigurationseinrichtung über dieses Datennetz eine grafische Konfigurationsoberfläche auf einer zur Darstellung der Konfigurationsoberfläche geeigneten Anzeigeeinrichtung darstellbar ist, wobei durch die Konfigurationsoberfläche zumindest zwei in der Konfigurationseinrichtung gespeicherte Konfigurationsprofile auswählbar sind und diese direkt durch die Konfigurationseinrichtung vergleichbar sind.

Vorzugsweise weist die Konfigurationseinrichtung eine Schnittstelle auf, mittels der mindestens ein Ergebnis des Vergleichs, beispielsweise sich unterscheidende Parameter der verglichenen Konfigurationsprofile, durch die über das Datennetz mit dem Routersystem verbundene Anzeigeeinrichtung auf der Konfigurationsoberfläche anzeigbar ist. Einem Benutzer ist es somit möglich, sich als Ergebnis des Vergleichs diejenigen Parameter anzeigen zu lassen, die sich bei zwei zu vergleichenden Konfigurationsprofilen unterscheiden. Nicht zuletzt für die Vermeidung von Fehlern kann ein derartiger Vergleich notwendig sein. Versehentliche und unerwünschte Konfigurationsänderungen sind somit für einen Benutzer schnell erkennbar.

In einer bevorzugten Ausführungsform weist das Routersystem eine Kommunikationseinrichtung auf, mit der die Ergebnisse des Vergleichs in speicherbarer Form auf eine externe Speichereinrichtung, beispielsweise einen externen Rechner, übertragbar sind. Es ist demzufolge möglich, Konfigurationsprofilvergleiche zu dokumentieren und zu sichern, wodurch ein Erstellen weiterer Konfigurationsprofile erleichtert wird und auch im Fehlerfall eine vereinfachte Fehleranalyse möglich ist.

Des Weiteren kann ein Speicher des Routersystems, auf dem mindestens eines der mindestens zwei Konfigurationsprofile abgelegt ist, ein nicht flüchtiger Speicher sein. Somit können erstellte Konfigurationsprofile für einen späteren Zeitpunkt gespeichert werden und bleiben auch bei einem Ausfall der Stromversorgung erhalten. Derartige nicht flüchtige Speicher können beispielsweise Festplatten, Flash-Speicher, EPROM oder NVRAM (non-volatile random access memory) sein.

Bevorzugt weist der nicht flüchtige Speicher weiterhin einen Speicherbereich auf, der für mindestens eine Auswahl von Benutzern nicht löschbar ist. Es wäre denkbar zumindest eines der Konfigurationsprofile in dem Speicherbereich des nicht flüchtigen Speichers abzulegen, der für mindestens eine Auswahl von Benutzern nicht löschbar ist. Ein derartiges Konfigurationsprofil könnte ein werkseitig vorinstalliertes Konfigurationsprofil sein. Üblicherweise ist es einem Benutzer nicht möglich, dieses Konfigurationsprofil zu löschen, damit ein sicherer Anfangszustand wieder herstellbar ist. Es muss aber auch möglich sein den Anfangszustand z.B. mit Sicherheitsupdates auf den neuesten Stand zu bringen. Demzufolge sollte es einem Administrator ermöglicht sein, das werkseitig vorinstallierte Konfigurationsprofil zu löschen und durch ein Aktuelles zu ersetzen.

Es kann vorteilhaft sein, dass das Routersystem einen flüchtigen Speicher aufweist, auf dem eines der beiden Konfigurationsprofile ablegbar ist. Ein zu bearbeitendes Konfigurationsprofil ist somit zunächst, beispielsweise zu Testzwecken, in einem flüchtigen Speicher abgelegt. Das Profil kann im Weiteren verworfen werden oder auch permanent in dem nichtflüchtigen Speicher abgelegt werden. Derartige flüchtige Speicher können beispielsweise DRAM oder SRAM Bausteine sein. Um die Funktionalität des Konfigurationsprofils zu testen, kann das auf dem flüchtigen Speicher abgelegte Konfigurationsprofil durch die Konfigurationseinrichtung zumindest temporär aktivierbar sein.

In einer besonders bevorzugten Ausführungsform ist eines der zu vergleichenden Konfigurationsprofile das derzeit aktive Konfigurationsprofil. Dieses kann sowohl auf dem flüchtigen Speicher als auch auf dem nicht flüchtigen Speicher abgelegt sein.

Des Weiteren ist es bevorzugt, dass die Konfigurationseinrichtung eine Analyseeinrichtung umfasst, mittels welcher ein Konfigurationsprofil und/oder das Vergleichsergebnis vor der Aktivierung auf mögliche Fehler analysierbar ist. Ein Benutzer kann somit bei einem Vergleich auf mögliche Fehler in dem Konfigurationsprofil hingewiesen werden.

Um dem Benutzer eine vereinfachte Erstellung von Konfigurationsprofilen zu ermöglichen, ist es bevorzugt, dass die Konfigurationseinrichtung eine Modifizierungseinrichtung umfasst, mittels welcher ein im Speicher abgelegtes Konfigurationsprofil als Templat für ein modifiziertes Konfigurationsprofil bereitstellbar ist und das modifizierte Konfigurationsprofil speicherbar ist. Es können demnach neue Konfigurationsprofile aus bereits bestehenden Konfigurationsprofilen erzeugt werden, indem nur einzelne Parameter an die neuen Anforderungen angepasst werden.

Wie bereits erwähnt, ist es oft notwendig, dass der Benutzer Änderungen aus großer Distanz an den Routersystemen vornehmen muss. Im Falle einer Verbindungsunterbrechung zwischen dem Benutzer und der Konfigurationseinrichtung könnte somit ein nicht fertig bearbeitetes Konfigurationsprofil aktiviert werden.

Um dies zu vermeiden wäre es möglich, dass die Konfigurationseinrichtung eine Zeiterfassungseinrichtung aufweist, mittels der ein Zeitintervall zwischen einem Wechsel von einem ersten aktivierten Konfigurationsprofil zu einem zweiten Konfigurationsprofil und einer Bestätigung dieses Wechsels des Konfigurationsprofils durch einen Benutzer bestimmbar ist, wobei durch die Konfigurationseinrichtung das zweite Konfigurationsprofil temporär aktiv schaltbar ist und das erste Konfigurationsprofil erneut aktiv schaltbar ist, wenn innerhalb eines vorbestimmbaren Zeitintervalls das zweite Konfigurationsprofil nicht durch den Benutzer bestätigt ist. Eine Aktivierung eines Konfigurationsprofils muss demnach durch den Benutzer bestätigt werden. Bleibt im Fall einer Verbindungsunterbrechung die Bestätigung aus so bleibt das bisherige Konfigurationsprofil aktiv, wodurch ein sicherer Betrieb des Routersystems gewährleistet wird.

In einer bevorzugten Ausführungsform umfasst die Konfigurationseinrichtung eine Zeiterfassungseinrichtung, so dass durch die Konfigurationseinrichtung selbständig in Abhängigkeit eines Zeitintervalls und/oder eines Zeitpunkts ein Vergleich ausgewählter Konfigurationsprofile durchführbar ist.

Vorteilhafterweise umfasst die Konfigurationseinrichtung weiterhin eine automatische Kommunikationseinrichtung, mittels der mindestens ein Ergebnis des Vergleichs selbständig über eines der mit der Konfigurationseinrichtung verbundenen Datennetze übermittelbar ist. Ein Benutzer könnte somit beispielsweise täglich oder wöchentlich die Ergebnisse des automatischen Vergleichs zwischen dem aktiven Konfigurationsprofil mit einem ausgewählten Basiskonfigurationsprofil über eine der mit dem Konfigurationsprofil verbundenen Datenleitungen, beispielsweise per SMS oder per E-Mail, erhalten.

Weitere Vorteile, Ziele und Eigenschaften der vorliegenden Erfindung werden durch die nachfolgend beschriebene Zeichnung erläutert. In der Zeichnung zeigt:

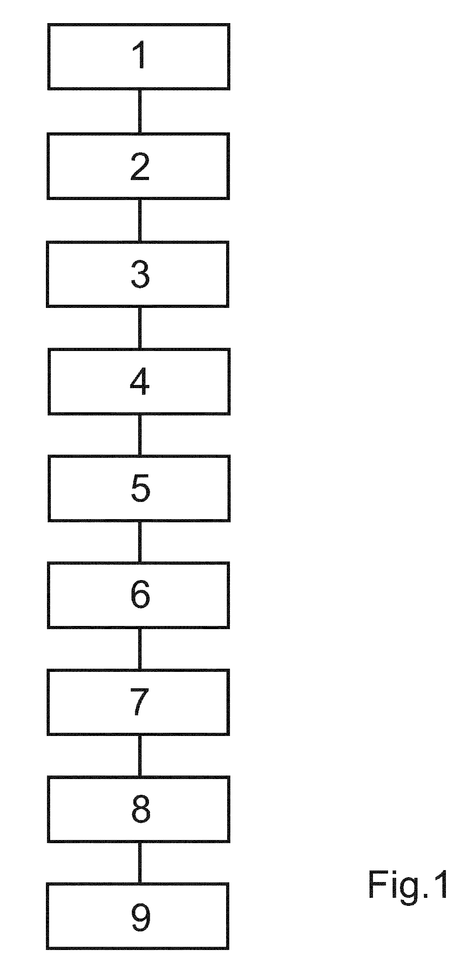

Figur 1 ein Verlaufsdiagramm eines Konfigurationsprofilvergleichs in einer Ausführungsform.

Figur 1 zeigt eine denkbare Ausführungsform eines konkreten Ablaufs eines Konfigurationsprofilvergleichs bei einem Routersystem zur Übertragung von Daten zwischen mindestens zwei verschiedenen Datennetzen. Dabei umfasst das Routersystem ein auf ein standardisiertes Trägersystem aufbringbares Gehäuse und eine im Gehäuse angeordnete Konfigurationseinrichtung zum Erstellen, Speichern und Verwalten von mindestens zwei Konfigurationsprofilen. Die Konfigurationseinrichtung ist mit mindestens einem der mit dem Routersystem verbundenen Datennetze verbunden. Des Weiteren ist durch die Konfigurationseinrichtung über dieses Datennetz eine grafische Konfigurationsoberfläche auf einer zur Darstellung der Konfigurationsoberfläche geeigneten Anzeigeeinrichtung darstellbar, wobei durch die Konfigurationsoberfläche zumindest zwei in der Konfigurationseinrichtung gespeicherte Konfigurationsprofile auswählbar sind. Die ausgewählten Konfigurationsprofile sind dann direkt durch die Konfigurationseinrichtung vergleichbar.

Im Verlaufsdiagramm wird nun bei Position 1 die in dem Routersystem enthaltene graphische Konfigurationsoberfläche von einem Benutzer über eines der mit dem Routersystem bzw. mit der Konfigurationseinrichtung verbundenen Datennetze aufgerufen und über eine geeignete Anzeigeeinrichtung dargestellt. Dafür ist beispielsweise ein Mobilfunkgerät oder ein PC geeignet. Beispielhafte Datennetze wären demzufolge ein Mobilfunknetz, ein WAN-Netz oder ein LAN-Netz. Der Benutzer kann bei Position 2 ein Konfigurationsprofil mittels einer Modifizierungseinrichtung, welche Teil der Konfigurationseinrichtung ist, erstellen oder ändern, gemäß den Anforderungen aus Anwendungsfall A. Dieses Konfigurationsprofil wird bei Position 3 unter einem Namen A in dem Speicher des Routersystems abgelegt. Bei Position 4 wird eine Konfiguration nach Anforderungen aus Anwendungsfall B mittels einer Modifizierungseinrichtung, welche Teil der der Konfigurationseinrichtung ist, erstellt oder geändert und bei Position 5 unter dem Namen B in dem Speicher des Routersystems abgelegt. Der Speicher des Routersystem kann dabei bevorzugt ein flüchtiger Speicher oder weiter bevorzugt ein nicht flüchtiger Speicher sein. Um nun die beiden Konfigurationsprofile zu vergleichen muss bei Position 6 der Teil der Konfigurationseinrichtung, der die Funktion zum Vergleich bereitstellt aufgerufen werden. Für den zu erstellenden Vergleich muss zunächst bei Position 7 eine Basiskonfiguration X, beispielsweise das in dem Speicher des Routersystems abgelegte Konfigurationsprofil A, ausgewählt werden. Anschließend wird bei Position 8 das mit der Basiskonfiguration zu vergleichende Konfigurationsprofil Y, beispielsweise das in dem Speicher des Routersystems abgelegte Konfigurationsprofil B, ausgewählt. Schließlich wird bei Position 9 die Auswahl bestätigt und der Vergleichsvorgang gestartet.

Vorzugsweise wird das mindestens eine Ergebnis des Vergleichs durch die über das Datennetz mit dem Routersystem verbundene Anzeigeeinrichtung auf der Konfigurationsoberfläche dem Benutzer angezeigt.

Die Punkte bei den Positionen 1 bis 5 sind optional und müssen nicht direkt vor dem Vergleich stattfinden. Des Weiteren kann eines der zu vergleichenden Konfigurationsprofile ein vom Hersteller werkseitig vorinstalliertes Konfigurationsprofil sein. Dieses bevorzugt für mindestens eine Auswahl von Benutzern nicht löschbare Konfigurationsprofil wird als Basiskonfiguration X ausgewählt und kann beispielsweise mit einem aktuell verwendeten Konfigurationsprofil verglichen werden. Damit kann auf einfache Art festgestellt werden, welche Änderungen an der Konfiguration seit der Auslieferung vorgenommen worden sind.

Der Profilvergleich kann auch dahingehend verwendet werden, um ein von einem Benutzer erstelltes Konfigurationsprofil mit dem aktuell auf dem Router aktiven Konfigurationsprofil zu vergleichen. Dazu wird als Basiskonfiguration X die entsprechen benannte aktive Konfiguration ausgewählt. Ein solcher Vergleich ermöglicht beispielsweise ein schnelles Erkennen fehlerhafter Einstellungen.

Die Ergebnisse des Vergleichs können schließlich zur weiteren Verwendung in speicherbarer Form auf eine externe Speichereinrichtung, beispielsweise einen externen Rechner, übertragen werden, beispielsweise zum Zweck der Sicherung oder zur Erfüllung von Dokumentationspflichten.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Routersystem zur Übertragung von Daten zwischen mindestens zwei verschiedenen Datennetzen, umfassend ein auf ein standardisiertes Trägersystem aufbringbares Gehäuse, wobei das Routersystem eine im Gehäuse angeordnete Konfigurationseinrichtung zum Erstellen, Speichern und Verwalten von mindestens zwei Konfigurationsprofilen umfasst, **dadurch gekennzeichnet, dass** die Konfigurationseinrichtung mit mindestens einem der mit dem Routersystem verbundenen Datennetze verbunden ist und durch die Konfigurationseinrichtung über dieses Datennetz eine grafische Konfigurationsoberfläche auf einer zur Darstellung der Konfigurationsoberfläche geeigneten Anzeigeeinrichtung darstellbar ist, wobei durch die Konfigurationsoberfläche zumindest zwei in der Konfigurationseinrichtung gespeicherte Konfigurationsprofile auswählbar sind und diese direkt durch die Konfigurationseinrichtung vergleichbar sind.

2. Routersystem nach Anspruch 1, **dadurch gekennzeichnet, dass** die Konfigurationseinrichtung eine Schnittstelle aufweist, mittels der mindestens ein Ergebnis des Vergleichs, beispielsweise sich unterscheidende Parameter der verglichenen Konfigurationsprofile, durch die über das Datennetz mit dem Routersystem verbundene Anzeigeeinrichtung auf der Konfigurationsoberfläche anzeigbar ist.

3. Routersystem nach Anspruch 1 oder 2, **dadurch gekennzeichnet, dass** das Routersystem eine Kommunikationseinrichtung aufweist, mit der die Ergebnisse des Vergleichs in speicherbarer Form auf einer externen Speichereinrichtung, beispielsweise einem externen Rechner, übertragbar sind.

4. Routersystem nach Anspruch 1, **dadurch gekennzeichnet, dass** ein Speicher des Routersystems, auf dem mindestens eines der mindestens zwei Konfigurationsprofile abgelegt ist, ein nicht flüchtiger Speicher ist.

5. Routersystem nach Anspruch 4, **dadurch** h **gekennzeichnet,** dass der nicht flüchtige Speicher einen Speicherbereich aufweist, der für mindestens eine Auswahl von Benutzern nicht löschbar ist.

6. Routersystem nach Anspruch 5, **dadurch gekennzeichnet, dass** zumindest eines der Konfigurationsprofile in dem Speicherbereich des nicht flüchtigen Speichers abgelegt ist, der für mindestens eine Auswahl von Benutzern nicht löschbar ist.

7. Routersystem nach Anspruch 1, **dadurch** h **gekennzeichnet,** dass das Routersystem einen flüchtigen Speicher aufweist, auf dem eines der beiden Konfigurationsprofile ablegbar ist.

8. Routersystem nach einem der vorangehenden Ansprüche, **dadurch** h **gekenn**z**eichne**t, dass die Konfigurationseinrichtung eine Analyseeinrichtung umfasst, mittels welcher ein Konfigurationsprofil und/oder das Vergleichsergebnis vor der Aktivierung auf mögliche Fehler analysierbar ist.

9. Routersystem nach einem der vorangehenden Ansprüche, **dadurch** h **gekennzeichnet**, dass die Konfigurationseinrichtung eine Modifizierungseinrichtung umfasst, mittels welcher ein im Speicher abgelegtes Konfigurationsprofil als Templat für ein modifiziertes Konfigurationsprofil bereitstellbar ist und das modifizierte Konfigurationsprofil speicherbar ist.

10. Routersystem nach Anspruch 9, **dadurch** h **gekennzeichnet,** dass die Konfigurationseinrichtung eine Zeiterfassungseinrichtung aufweist, mittels der ein Zeitintervall zwischen einem Wechsel von einem ersten aktivierten Konfigurationsprofil zu einem zweiten Konfigurationsprofil und einer Bestätigung dieses Wechsels des Konfigurationsprofils durch einen Benutzer bestimmbar ist, wobei durch die Konfigurationseinrichtung das zweite Konfigurationsprofil temporär aktiv schaltbar ist und das erste Konfigurationsprofil erneut aktiv schaltbar ist, wenn innerhalb eines vorbestimmbaren Zeitintervalls das zweite Konfigurationsprofil nicht durch den Benutzer bestätigt ist.

11. Routersystem nach einem der vorangehenden Ansprüche, **dadurch** h **gekennzeichnet**, dass die Konfigurationseinrichtung eine Zeiterfassungseinrichtung umfasst und durch die Konfigurationseinrichtung selbständig in Abhängigkeit eines Zeitintervalls und/oder eines Zeitpunkts ein Vergleich ausgewählter Konfigurationsprofile durchführbar ist.

12. Routersystem nach Anspruch 11, **dadurch** h **gekennzeichnet,** dass die Konfigurationseinrichtung eine automatische Kommunikationseinrichtung umfasst, mittels der mindestens ein Ergebnis des Vergleichs selbständig über eines der mit der Konfigurationseinrichtung verbundenen Datennetze übermittelbar ist.

13. Verfahren zum Konfigurationsprofilvergleich bei einem Routersystem zur Übertragung von Daten zwischen mindestens zwei verschiedenen Datennetzen, wobei das Routersystem ein auf ein standardisiertes Trägersystem aufbringbares Gehäuse und eine im Gehäuse angeordnete Konfigurationseinrichtung zum Erstellen, Speichern und Verwalten von mindestens zwei Konfigurationsprofilen umfasst, wobei die Konfigurationseinrichtung mit mindestens einem der mit dem Routersystem verbundenen Datennetze verbunden ist und über dieses Datennetz eine grafische Konfigurationsoberfläche auf einer zur Darstellung der Konfigurationsoberfläche geeigneten Anzeigeeinrichtung dargestellt wird, **dadurch** h **gekennzeichnet,** dass durch die Konfigurationsoberfläche zumindest zwei in der Konfigurationseinrichtung gespeicherte Konfigurationsprofile auswählbar dann direkt durch die Konfigurationseinrichtung vergleichbar sind.

14. Verfahren zum Konfigurationsprofilvergleich gemäß Anspruch 13, dadurch h g e - **kennzeichnet,** dass die in dem Routersystem enthaltene graphische Konfigurationsoberfläche von einem Benutzer über eines der mit dem Routersystem oder mit der Konfigurationseinrichtung verbundenen Datennetze aufgerufen und über eine geeignete Anzeigeeinrichtung bevorzugt eines Mobilfunkgeräts oder eines PCs dargestellt wird.

15. Verfahren zum Konfigurationsprofilvergleich gemäß einem der Ansprüche 13 oder 14, **dadurch** h **gekennzeichnet,** dass Ergebnisse des Vergleichs zur weiteren Verwendung in speicherbarer Form auf eine externe Speichereinrichtung, bevorzugt einen externen Rechner, übertragen werden.
